# EUROPEAN PATENT APPLICATION

(11) **EP 3 141 131 A1**
(43) Date of publication of application: **15.03.2017**
(21) Application number: 15789057.5
(22) Date of filing: 07.05.2015
(51) Int. Cl.: A23L 3/3571, A23L 2/38, A23L 2/42, A23L 2/70, A23L 3/365, A23L 3/37

(54) **YEAST EXTRACT FOR INHIBITING FLOCCULATION AND SETTLING IN FOODS AND BEVERAGES**

(30) Priority: 08.05.2014 JP 2014096469
(71) Applicant: KOHJIN Life Sciences Co., Ltd., Tokyo 100-0006 (JP)
(72) Inventor: NAKAO, Eiji, Saiki-shi Oita 876-8580 (JP); YASUMATSU, Yoshie, Saiki-shi Oita 876-8580 (JP); ASON, Kenichi, Saiki-shi Oita 876-8580 (JP)
(74) Representative: Müller-Boré & Partner Patentanwälte PartG mbB
(86) International application number: PCT/JP2015/063222
(87) International publication number: WO 2015/170714

(57) **Abstract**

**[Problem]**

To manufacture an antiflocculation/settling agent with a method having a low cost and low environmental impact, the agent having a high level of safety and no taste, and having an inhibitory effect on flocculation/settling of a food or beverage. Also, to make effective use of yeast cell body residue produced as a byproduct of yeast extract.

**[Means for Solving the Problem]**

Yeast cell body residue remaining after removal of useful extract from yeast is suspended in water and heated, after which the suspension is subjected to centrifugal separation and supernatant is collected. This fraction contains at least 15wt% RNA content per solid content, at least 10 wt% dietary fiber content, and at least 15 wt% protein content, and mannan makes up at least 50 wt% of the dietary fiber. This fraction can be used as an antiflocculation/settling agent in foods and beverages.

## Description

### FIELD OF THE INVENTION

The invention of the instant application relates to an antiflocculation/settling agent for foods and beverages, for example, which is obtained from yeast cell body residue.

### BACKGROUND OF THE INVENTION

In fluid foods and beverages, flocculation and settling of components is often disliked due to appearance, texture, inconsistency of components, and the like. One case in which flocculation/settling of foods and beverages is likely to occur is in frozen storage. Frozen storage is an extraordinarily effective method for foods and beverages, and is typically used as a method of longterm storage of fresh foods as well as processed foods. However, once frozen and stored, many fluid foods and beverages experience flocculation/settling when thawed, which lowers the quality of the food or beverage in aspects such as texture and appearance.

An example of a method preventing lowered quality of foods and beverages due to freezing is to inhibit formation of ice crystals by adding antifreeze protein (AFP) to the food, which has been discovered to be capable of preventing freezing denaturation of food. Exemplary methods of obtaining AFP have been reported in which the AFP is obtained from genetically modified bacterial cells (Patent Literature 1), or the AFP is extracted from a natural substance such as pond smelt or plant sprouts (Patent Literature 2).

Patent Literature 3 reports that a shelf life of frozen food such as frozen soba noodles can be increased by adding a substitute obtained by culturing yeast cell bodies or the like, and that because such a substitute contains organic acids having umami flavor, the umami flavor can also be imparted to the food to which the substitute is added. Patent Literature 4 reports that frozen shelf life of a frozen food or beverage derived from grains, vegetables, or fruit is improved by a method adding cellooligosaccharide to a plant-based food or beverage. Also, freezing denaturation of proteins in a food can be prevented by adding to the food a composition in which galactomannan is converted to a low molecular weight by an enzyme or microorganism (Patent Literature 5).

Another case where flocculation/settling of a food or beverage is likely to occur is in acidic dairy beverages and acidic soy milk beverages. In recent years, accompanying a rise in health awareness, acidic dairy beverages have drawn attention. However, milk constituents are unlikely to dissolve in water near the isoelectric point (near pH 4.6), and the milk constituents are likely to lead to flocculation/settling. In addition, when the milk constituents are heated as part of pasteurization or the like, flocculation/settling is accelerated, and when heated at close to the isoelectric point, flocculation/settling is even further promoted. Therefore, many acidic dairy beverages are designed to avoid a pH close to the isoelectric point. However, when the pH is lowered to avoid the isoelectric point, acidic taste grows more intense, whereas when the pH is raised, a refreshing sensation is lost. The same is true for soy milk beverages. Accordingly, there is an issue with dairy beverages and soy milk beverages of inhibiting flocculation/settling in a pH range of 3.5 to 5.0, where a preferred taste and refreshing sensation can be achieved.

Examples of reported methods to inhibit flocculation/settling of milk constituents in an acidic dairy beverage include a method where amino acid, glucosaminoglycan, and collagen are added to an acidic dairy beverage; a method where arginine, high-methoxy pectin, and potassium ions are added to an acidic dairy beverage; a method where water-soluble hemicellulose is added to an acidic dairy beverage; a method where polygyceryl fatty acid ester and pectin are added to an acidic dairy beverage; a method where carboxymethyl cellulose is added to an acidic dairy beverage; a method where water-soluble soy bean polysaccharide is added to an acidic dairy beverage; and a method where polysaccharide is added to an acidic dairy beverage (Patent Literature 6). There is a concern that complete inhibition of settling and flocculation of milk constituents is impossible with the substances and the like used in these reports, and that when an additive amount is too large, viscosity increases, drinkability worsens, and so on. Moreover, each of these publications requires homogenization of the milk constituents.

Meanwhile, yeast contains components such as nucleic acid, amino acid, and peptides. An extract of these can be used as a source of glutathione (a pharmaceutical), or as yeast extract (a natural seasoning). Various methods of producing yeast extract are known which use extracting enzymes, mediums, and the like. Examples include the method of Patent Literature 7.

Cell body residue which remains after yeast extract and the like is extracted from yeast contains glucan, mannan, mannoprotein, proteins, lipids, and nucleic acids as primary components. A plurality of known publications address methods of treating such yeast cell body residue and methods of making effective use of the same. For example, Patent Literature 8 discloses a method of treating waste water by making a yeast extract residue soluble using a specific enzyme. Patent Literature 9 describes a method of producing mannose by causing a yeast extract residue to be assimilated by microorganisms. Patent Literature 10 describes a method of obtaining a medicinal compound by alkali treatment of a yeast extract residue, followed by irrigation thereof. Patent Literature 11 describes a method of obtaining a microorganism culture substrate material by allowing a cell wall lytic enzyme or the like to act on yeast extract residue. Given the situation, a more effective method of using yeast cell body residue is desired.

### RELATED ART

### Patent Literature

Patent Literature 1: WO94/03617, Japanese Publication of PCT International Application No. H10-508759
Patent Literature 2: Japanese Publication of PCT International Application No. 2000-515751, Japanese Patent Laid-open Publication No. 2003-250572, Japanese Patent Laid-open Publication No. 2007-153834
Patent Literature 3: Japanese Patent Laid-open Publication No. 2003-144118
Patent Literature 4: Japanese Patent Laid-open Publication No. 2010-226995
Patent Literature 5: Japanese Patent Laid-open Publication No. 2008-143986, Japanese Patent Laid-open Publication No. 2012-224650
Patent Literature 6: Japanese Patent Laid-open Publication No. 2011-200119, Japanese Patent Laid-open Publication No. 2009-159819, Japanese Patent Laid-open Publication No. 2008-011719, Japanese Patent Laid-open Publication No. 2006-006276, Japanese Patent Laid-open Publication No. 2006-006275, Japanese Patent Laid-open Publication No. 2004-229566, Japanese Patent Laid-open Publication No. 2002-300849, Japanese Patent Laid-open Publication No. H10-286061, Japanese Patent Laid-open Publication No. H10-014547, Japanese Patent Laid-open Publication No. H09-094060, Japanese Patent Laid-open Publication No. H08-280366, Japanese Patent Laid-open Publication No. H08-154652, Japanese Patent Laid-open Publication No. H05-219884
Patent Literature 7: Japanese Patent Laid-open Publication No. H5-252894, Japanese Patent Laid-open Publication No. H6-113789, Japanese Patent Laid-open Publication No. H9-56361
Patent Literature 8: Japanese Patent Laid-open Publication No. H7-184640
Patent Literature 9: Japanese Patent Laid-open Publication No. H10-57091
Patent Literature 10: Japanese Patent Laid-open Publication No. 2001-55338
Patent Literature 11: Japanese Patent Laid-open Publication No. 2007-006838

### SUMMARY OF THE INVENTION

### Problems to Be Solved by the Invention

An issue to be resolved is inhibiting flocculation/settling of fluid foods and beverages and maintaining their quality. To do this, a substance is used which is highly safe for foods and beverages and has no taste, and which can be manufactured at a low cost with a method having a low environmental impact. Moreover, this is an effective use of yeast cell body residue, which is produced as a byproduct of yeast extract.

### Means for Solving the Problems

As a result of thorough research to resolve the above-noted issues, the inventors of the present invention have discovered that hot extract of yeast cell body residue is effective in inhibiting flocculation/settling of foods and beverages.

Specifically, the present invention relates to:
(1) An antiflocculation/settling agent composed of yeast extract, the agent inhibiting flocculation and/or settling arising from freezing and thawing of an aqueous solution;
(2) An antiflocculation/settling agent composed of yeast extract, the agent inhibiting flocculation and/or settling arising from freezing and thawing of a food or beverage;
(3) An antiflocculation/settling agent composed of yeast extract, the agent inhibiting flocculation and/or settling of, and imparting thermal stability to, protein in an acidic dairy beverage or acidic soy milk beverage having a pH of 3.5 to 5.0;
(4) The antiflocculation/settling agent according to any of (1) to (3) above, in which an amount of RNA content per solid content of the yeast extract is at least 15 wt%, dietary fiber content is at least 10 wt%, and protein content is at least 15 wt%;
(5) The antiflocculation/settling agent according to (4), wherein mannan content makes up at least 50 wt% of the dietary fiber;
(6) The antiflocculation/settling agent according to any of (1) to (5) above, in which the yeast extract is obtained using yeast cell body residue;
(7) The antiflocculation/settling agent according to any of (1) to (6) above, in which the yeast is *Candida utilis;* and
(8) A method of inhibiting flocculation/settling of a food or beverage by including 0.01 to 3 wt% of the antiflocculation/settling agent according to any of (1) to (7) in the food or beverage.

### Effect of the Invention

According to the present invention, a yeast extract having an excellent effect in antiflocculation/settling of an aqueous solution, fluid food, or beverage can be obtained from Torula yeast (*Candida utilis*), which is edible and known to be safe. By adding a small amount of the yeast extract to various kinds of aqueous solutions, foods, or beverages, quality can be improved by inhibiting flocculation/settling arising from freezing and thawing, inhibiting flocculation/settling of milk constituents in an acidic dairy beverage, or inhibiting flocculation/settling due to heating the milk constituents. Therefore, the yeast extract can be used as an antiflocculation/settling agent. Such yeast extract has no taste, and therefore does not impart a foreign taste to foods or beverages to which the yeast extract is added. Unlike cases using plants or animals as raw materials, there is little risk of supply instability, price fluctuation, and quality variation when using yeast as the raw material. Moreover, cell body residue which remains after extracting the yeast extract or the like can be used as the raw material, and a yeast extract inhibiting flocculation/settling arising in foods and beverages can be obtained from this with a simple process. Cell body residue of Torula yeast is produced in large quantities as a byproduct of manufacturing yeast extract (a seasoning) and other useful constituents. The present invention is able to make effective use of this yeast cell body residue, and is therefore also very advantageous in view of cost and reduction in industrial waste.

### MODE FOR CARRYING OUT THE INVENTION

Hereafter, a concrete description of the present invention is given. The yeast referenced in the present invention is a non-genetically modified yeast that may be used in food manufacture. Specific examples may include *Candida utilis, Saccharomyces cerevisiae,* and the like. Of these, *Candida utilis* is preferred.

The yeast cell body residue of the present invention is a residue remaining after yeast extract or useful constituents have been removed from yeast by an extraction process using one or more of hot water, acid/alkaline solution, autolysis, mechanical pulverization, a cell wall lytic enzyme, a proteolytic enzyme, ribonuclease, or deaminase. Examples include "KR yeast" manufactured by Kohjin Life Sciences Co., Ltd. Such residue is typically primarily composed of glucan, mannan, protein, lipids, and nucleic acid. Structurally, the glucan, mannan, protein, and other components form a conjugate and are expected to form strong bonds. Residue remaining after acid extraction from yeast, in particular, is highly active and is preferably used as the yeast cell body residue used to manufacture the yeast extract inhibiting flocculation/settling according to the present invention.

A process of obtaining yeast extract inhibiting flocculation/settling according to the present invention is, first, to wash the above-described yeast cell body residue with water. Specifically, water is added to the yeast cell body residue and a cell body suspension is prepared having a concentration of approximately 10 wt% of dried cell body weight. If necessary, the pH of the cell body suspension is adjusted to be close to neutral. Supernatant is removed by centrifugation, and the cleaned yeast cell body residue is obtained. This cleaning process is performed once, or two or more times. Next, water is added to the cleaned yeast cell body residue and the cell body suspension is prepared having a concentration of approximately 10 wt% of dried cell body weight, then a heat treatment is performed on the suspension at 80°C to 100°C for at least 10 minutes, and preferably for 15 to 30 minutes. Next, sediment is removed with a centrifugal separator and a fraction containing dietary fiber and protein is obtained as the supernatant. This fraction is used as-is or is dried for use as the yeast extract of the present invention. In addition, the yeast extract of the present invention is further passed through an ultrafilter (molecular weight cut-off 50,000) to remove components having a molecular weight of 50,000 or less. The resulting yeast extract has a high flocculation/settling inhibiting effect.

Yeast extract in which an amount of RNA content per solid content of the yeast extract is at least 15 wt%, and preferably at least 20 wt%; dietary fiber content is at least 10 wt%, and preferably at least 25 wt%; and protein content is at least 15 wt%, and preferably at least 20 wt%, has a high antiflocculation/settling effect. Moreover, the effect is even higher when mannan content makes up at least 50 wt%, and preferably at least 70 wt%, of the dietary fiber. Meanwhile, as constituents having a strong taste, inosinic acid, guanylic acid, and glutamic acid content is preferably low.

An HPLC method is used in the present invention to measure the RNA content. GS-320HQ is used as a separation column, and 0.1 M sodium phosphate buffer (pH 7.0) is used as a mobile phase. Detection is performed at UV 260 nm. The RNA content is found from an area of a peak obtained by injecting the yeast extract. A hydrolysis method is used to measure the content amount of protein in the yeast extract. After hydrolyzing the yeast extract in 6 N hydrogen chloride at 110°C for 24 hours, pretreatment is performed and measurement is conducted with a fully automatic amino acid analyzer (manufactured by Hitachi Ltd.). A hydrolysis method is used to measure the dietary fiber content. The yeast extract is hydrolyzed in 1 N sulfuric acid at 110°C for 3.5 hours and is neutralized, after which mannose and glucose (hydrolysis products) are measured using liquid chromatography, and are converted to glucan/mannan. An RI detector is used for detection, an SP810 (Shodex) is used for the separation column, and ultrapure water is used for the mobile phase.

The yeast extract obtained using the manufacturing method described above, with yeast cell body residue as the raw material, can be used without alteration as an antiflocculation/settling agent for aqueous solutions or food and beverages. Alternatively, when necessary, the yeast extract may be blended with other soluble constituents to produce an antiflocculation/settling agent. Fields of use to which the present invention may be favorably applied are preserving quality of food and beverages that are stored frozen, and preserving quality of acidic dairy beverages. However, the field of use is not particularly limited to food and beverages, and the present invention can be used in a wide variety of applications.

An aqueous solution of the present invention is not particularly limited. Specific examples include an aqueous pigment solution, an aqueous food additive solution, an aqueous food ingredient solution, an aqueous drug solution, and the like. A food of the present invention is a fluid food, including examples such as soup, shakes, yogurt, and the like. A beverage of the present invention is not particularly limited. Specific examples include juices, soft drinks, teas, coffee, cocoa, dairy beverages, alcoholic beverages, and the like. An acidic dairy beverage of the present invention refers to a beverage containing milk protein and having a pH of 3.5 to 5.0. An acidic soy milk beverage of the present invention refers to a beverage containing soy protein and having a pH of 3.5 to 5.0.

The antiflocculation/settling agent according to the present invention is capable of inhibiting flocculation and/or settling of an aqueous solution, food, or beverage by adding the agent to the aqueous solution, food, or beverage. Intensity of the effect of the antiflocculation/settling agent according to the present invention differs according to the type, pH, and base material concentration of the aqueous solution, food, or beverage. Therefore, a preferred blending amount differs according to the type, pH, and concentration of the aqueous solution, food, or beverage. However, broadly speaking, the preferred blending amount is 0.01 to 3 wt% (as dried yeast extract), preferably 0.01 to 1 wt%, and more preferably 0.5 to 1 wt%.

### EXAMPLES

The present invention is described in detail in exemplary embodiments below.

### <Exemplary Manufacture>

Using a 10 N sulfuric acid, a 10% cell body suspension of *Candida utilis* Cs 7529 strain (FERM BP-1656 strain) was adjusted to a pH of 3.5, then was subjected to a heat treatment at 60°C for 30 minutes, after which the suspension was separated into yeast extract and yeast cell body residue with a centrifugal separator. After this, water was added to the yeast cell body residue and an 8 wt% (dried weight) cell body suspension was prepared. After adjusting 18 kg of the 8% concentration yeast residue suspension to pH 7.0, solids and supernatant were separated by a separator (Alfa Laval centrifugal separator: LAPX202 BGT-24-50/60) and the solids were collected. The solid content was suspended in water to yield an 8% concentration solution. The solids and supernatant were once again separated by the separator, and the solids collected again. The solid content was suspended in water and a heat treatment was performed at 90°C for 20 minutes, then cooling was performed with cool water. After this, the supernatant was collected by the separator; concentrated by a large Evapor and evaporator; and freeze-dried to obtain approximately 80 g powdered yeast extract, which was designated as a Sample 1 antiflocculation/settling agent. Sample 1 was treated with an ultrafilter (molecular weight cut-off 50,000), and a sample having components with a molecular weight of 50,000 or less removed was designated as a Sample 2 antiflocculation/settling agent. In Sample 1, RNA content was 17.6wt%, dietary fiber content was 15.0 wt%, and protein content was 23.9 wt%. Mannan content made up 67.4 wt% of the dietary fiber. In Sample 2, RNA content was 16.7wt%, dietary fiber content was 16.1 wt%, and protein content was 19.5 wt%. Mannan content made up 61.5 wt% of the dietary fiber.

### <Embodiment 1> Blueberry Juice Freezing and Thawing Trial

Frozen blueberries were used. 80 g of frozen blueberries were mixed with 300 g of water, and were pulverized in a mixer. The liquefied blueberries were subjected to centrifugal separation at 5000 rpm for 10 minutes to remove insolubles. Supernatant was used as blueberry juice in the trial. The antiflocculation/settling agent of Sample 1, manufactured in the exemplary manufacture, was dissolved in the blueberry juice at 0.5% for the total amount of juice. The solution was frozen at -20°C for two days, after which the solution was thawed and settling (flocculation) was checked with a centrifugation operation.

### <Embodiment 2>

Embodiment 2 was conducted similarly to Embodiment 1 except that 0.2% of Sample 1 was added.

### <Comparative Example 1>

Comparative Example 1 was conducted similarly to Embodiment 1 except that water was added instead of Sample 1.

As a result of evaluation, a large amount of settling after freezing and thawing was observed in Comparative Example 1, whereas settling after freezing and thawing was inhibited in Embodiments 1 and 2, in that order.

### <Embodiment 3> Carrot Juice Freezing and Thawing Trial

120 g of carrots were mixed with 300 g of water, and were pulverized in a mixer. The liquefied carrots were subjected to centrifugal separation at 5000 rpm for 10 minutes to remove insolubles. Supernatant was used as carrot juice in the trial. Sample 1 was dissolved in the carrot juice at 0.5% for the total amount of juice. The solution was frozen at -20°C for two days, after which the solution was thawed and settling (flocculation) was checked using centrifugation.

### <Embodiment 4>

Embodiment 4 was conducted similarly to Embodiment 3 except that 0.2% of Sample 1 was added.

### <Embodiment 5>

Embodiment 5 was conducted similarly to Embodiment 3 except that 0.05% of Sample 1 was added.

### <Comparative Example 2>

Comparative Example 2 was conducted similarly to Embodiment 3 except that water was added instead of Sample 1.

As a result of evaluation, a large amount of settling after freezing and thawing was observed in Comparative Example 2, whereas settling after freezing and thawing was inhibited in Embodiments 3, 4, and 5, in that order.

### <Embodiment 6> Pigment Solution Freezing and Thawing Trial

Sun Orange No. 2 (manufactured by San-Ei Gen F.F.I., Inc.) was used as pigment. A 0.1% aqueous solution of Sun Orange No. 2 was used in the trial as the pigment solution. Sample 1 was measured so as to make up 0.5% of the pigment solution, and was dissolved in the pigment solution. The solution was frozen overnight at -20°. After freezing, the solution was thawed at room temperature. After thawing, various samples were filtered through filter paper and flocculated pigment was collected.

### <Embodiment 7>

Embodiment 7 was conducted similarly to Embodiment 6 except that Sample 2 was added instead of Sample 1.

### <Comparative Example 3>

Comparative Example 3 was conducted similarly to Embodiment 6 except that water was added instead of Sample 1.

### <Comparative Example 4>

Comparative Example 4 was conducted similarly to Embodiment 6 except that saponin was added instead of Sample 1.

### <Comparative Example 5>

Comparative Example 5 was conducted similarly to Embodiment 6 except that carrageenan was added instead of Sample 1.

### <Comparative Example 6>

Comparative Example 6 was conducted similarly to Embodiment 6 except that lecithin ("Sun Lecithin" manufactured by Taiyo Kagaku) was added instead of Sample 1.

As a result of evaluation, settling after freezing and thawing was inhibited in Embodiment 6 (to which Sample 1 was added) and Embodiment 7 (to which Sample 2 was added) as compared to Comparative Examples 3, 4, 5, and 6. Also, settling was more inhibited in Embodiment 7 than in Embodiment 6.

### <Embodiment 8> Whole Milk Powder Solution Freezing and Thawing Trial

A 5% aqueous solution of whole milk powder was prepared and used in the trial. Sample 1 was added so as to make up 0.5% of the aqueous solution and, after dissolving sufficiently, the solution was frozen for two days at -20°C. After the frozen solution was thawed at room temperature, the solution was sampled in a 1.5 ml tube and subjected to centrifugal separation at 10,000 RPM and settling (flocculate) was checked.

### <Comparative Example 7>

Comparative Example 7 was conducted similarly to Embodiment 8 except that gum arabic was added instead of Sample 1.

### <Comparative Example 8>

Comparative Example 8 was conducted similarly to Embodiment 8 except that lecithin ("Sun Lecithin" manufactured by Taiyo Kagaku) was added instead of Sample 1.

### <Comparative Example 9>

Comparative Example 9 was conducted similarly to Embodiment 8 except that water was added instead of Sample 1.

As a result of evaluation, settling after freezing and thawing was inhibited in Embodiment 8 (to which Sample 1 was added) as compared to Comparative Examples 7, 8, and 9.

### <Embodiment 9> Antiflocculation/settling of Acidic Dairy Beverage Trial (using skim milk)

Sucrose was measured out at 5 g, skim milk at 0.5 g, and the antiflocculation/settling agent of Sample 1 at 0.25 g, and were well dissolved in water, diluting to a total of 50 g. Citric acid was added to this solution to produce an acidic dairy beverage adjusted to a pH of 4.2. Ten milliliters of the prepared acidic dairy beverage was then placed in a screw vial and a lid was tightly affixed to the vial, after which the beverage was heated for 10 minutes at 100°C (boiling water). After heating, the beverage was cooled. A state of settling/separation before and after heating was checked.

### <Embodiment 10>

Embodiment 10 was conducted similarly to Embodiment 9 except that Sample 2 was added instead of Sample 1.

### <Comparative Example 10>

Comparative Example 10 was conducted similarly to Embodiment 9 except that water was added instead of Sample 1.

### <Comparative Example 11>

Comparative Example 11 was conducted similarly to Embodiment 9 except that gum arabic was added instead of Sample 1.

### <Comparative Example 12>

Comparative Example 12 was conducted similarly to Embodiment 9 except that saponin was added instead of Sample 1.

### <Comparative Example 13>

Comparative Example 13 was conducted similarly to Embodiment 9 except that lecithin ("Sun Lecithin" manufactured by Taiyo Kagaku) was added instead of Sample 1.

As a result of evaluation, settling/flocculation of milk constituents in the acidic dairy beverage was inhibited in Embodiments 9 and 10 both before and after heating. In Embodiments 9 and 10, almost no settling occurred even after two weeks. Embodiments 9 and 10 did not thicken, and even when heat treated, settling/flocculation was inhibited. In Comparative Examples 10, 11, 12, and 13, settling/flocculation occurred immediately after acidification.

### <Embodiment 11> Antiflocculation/settling of Acidic Dairy Beverage Trial (using cow's milk)

Sucrose was measured out at 5 g, whole cow's milk at 2.5 g, and the antiflocculation/settling agent of Sample 1 at 0.25 g, and were well dissolved in water, diluting to a total of 50 g. Citric acid was added to this solution to produce an acidic dairy beverage adjusted to a pH of 4.2. Ten milliliters of the prepared acidic dairy beverage was then placed in a screw vial and a lid was tightly affixed to the vial, after which the beverage was heated for 10 minutes at 100°C (boiling water). After heating, the beverage was cooled. A state of settling/separation before and after heating was checked.

### <Embodiment 12>

Embodiment 12 was conducted similarly to Embodiment 11 except that Sample 2 was added instead of Sample 1.

### <Comparative Example 13>

Comparative Example 13 was conducted similarly to Embodiment 11 except that water was added instead of Sample 1.

As a result of evaluation, settling/flocculation of milk constituents in the acidic dairy beverage was inhibited in Embodiments 11 and 12. Embodiments 11 and 12 did not thicken, and even when heat treated, settling/flocculation was inhibited. In Comparative Example 13, settling/flocculation occurred immediately after acidification.

### <Embodiment 13> Antiflocculation/settling of Acidic Soy Milk Beverage Trial

Sucrose was measured out at 5 g, processed soy milk (manufactured by MARUSAN-AI Co., Ltd.) at 3.5 g, and the antiflocculation/settling agent of Sample 1 at 0.25 g, and were well dissolved in water, diluting to a total of 50 g. Citric acid was added to this solution to produce an acidic soy milk beverage adjusted to a pH of 4.2. Ten milliliters of the prepared acidic soy milk beverage was then placed in a screw vial and a lid was tightly affixed to the vial, after which the beverage was heated for 10 minutes at 100°C (boiling water). After heating, the beverage was cooled. A state of settling/separation before and after heating was checked.

### <Embodiment 14>

Embodiment 14 was conducted similarly to Embodiment 13 except that Sample 2 was added instead of Sample 1.

### <Comparative Example 14>

Comparative Example 14 was conducted similarly to Embodiment 13 except that water was added instead of Sample 1.

As a result of evaluation, settling/flocculation of soy milk constituents in the acidic soy milk beverage was inhibited in Embodiments 13 and 14. Embodiments 13 and 14 did not thicken, and even when heat treated, settling/flocculation was inhibited. In Comparative Example 14, settling/flocculation occurred immediately after acidification.

### <Embodiment 15> Antiflocculation/settling of Acidic Dairy Beverage at Various pH Trial

Sucrose was measured out at 5 g, skim milk at 0.5 g, and the antiflocculation/settling agent of Sample 1 at 0.25 g, and were well dissolved in water, diluting to a total of 50 g. Citric acid was added to this solution to produce acidic dairy beverages adjusted to pH of 5.0, 4.8, 4.4.6_{[01]}, 4.4, 4.2, and 4.0. Ten milliliters of the prepared acidic dairy beverages was then placed in a screw vial and a lid was tightly affixed to the vial, after which the beverages were heated for 10 minutes at 100°C (boiling water). After heating, the beverages were cooled. A state of settling/separation before and after heating was checked.

### <Embodiment 16>

Embodiment 16 was conducted similarly to Embodiment 15 except that Sample 2 was added instead of Sample 1.

### <Comparative Example 15>

Comparative Example 15 was conducted similarly to Embodiment 15 except that water was added instead of Sample 1.

As a result of evaluation, settling/flocculation of milk constituents in the acidic dairy beverages at a pH of between 4.2 and 5.0 was inhibited in Embodiment 15. Settling/flocculation of milk constituents in the acidic dairy beverages at a pH of between 4.0 and 5.0 was inhibited in Embodiment 16. Embodiments 15 and 16 did not thicken, and even when heat treated, settling/flocculation was inhibited. Settling/flocculation occurred at all pH in Comparative Example 15.

### INDUSTRIAL APPLICABILITY

As described above, a yeast extract manufactured in the present invention inhibits flocculation/settling occurring in food and beverages, and by adding the yeast extract of the present invention ahead of time to a frozen product or to a food/beverage that is stored in an environment having a temperature at or below zero and is expected to be frozen, settling/flocculation due to freezing and thawing can be inhibited and a reduction in quality can be prevented. In addition, by adding the yeast extract of the present invention ahead of time when preparing an acidic (soy) milk beverage, settling/flocculation of (soy) milk constituents in the beverage can be inhibited. The yeast extract of the present invention inhibiting flocculation/settling occurring in foods and beverages can also be used in processed foods such as frozen foods, in beverages, in fresh foods, and in frozen storage of items other than food.

### BRIEF DESCRIPTION OF DRAWINGS

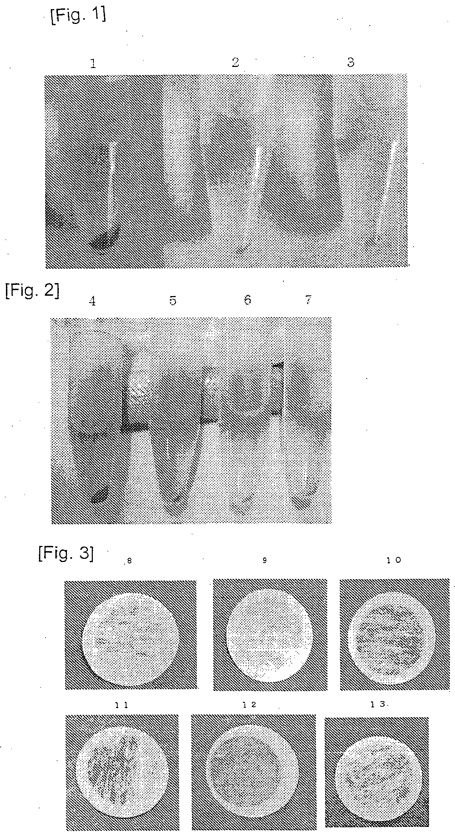

[FIG. 1] is a photograph showing results of freezing and thawing trials of blueberry juice (from right, Embodiment 1, Embodiment 2, Comparative Example 1).
[FIG. 2] is a photograph showing results of freezing and thawing trials of carrot juice (from right, Embodiment 3, Embodiment 4, Embodiment 5, Comparative Example 2).
[FIG. 3] is a photograph showing results of freezing and thawing trials of pigment solution (top, from left, Embodiment 6, Embodiment 7, Comparative Example 3; bottom, from left, Comparative Example 4, Comparative Example 5, Comparative Example 6).

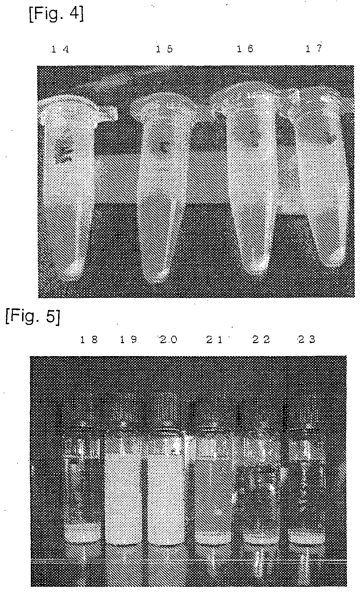

[FIG. 4] is a photograph showing results of freezing and thawing trials of whole milk (from left, Comparative Example 9, Embodiment 8, Comparative Example 7, Comparative Example 8).
[FIG. 5] is a photograph showing results of antiflocculation/settling trials of acidic dairy beverages (from left, Comparative Example 10, Embodiment 9, Embodiment 10, Comparative Example 11, Comparative Example 12, Comparative Example 13).

### DESCRIPTION OF REFERENCE NUMERALS

- 1: Comparative Example 1
- 2: Embodiment 2
- 3: Embodiment 1
- 4: Comparative Example 2
- 5: Embodiment 5
- 6: Embodiment 4
- 7: Embodiment 3
- 8: Embodiment 6
- 9: Embodiment 7
- 10: Comparative Example 3
- 11: Comparative Example 4
- 12: Comparative Example 5
- 13: Comparative Example 6
- 14: Comparative Example 9
- 15: Embodiment 8
- 16: Comparative Example 7
- 17: Comparative Example 8
- 18: Comparative Example 10
- 19: Embodiment 9
- 20: Embodiment 10
- 21: Comparative Example 11
- 22: Comparative Example 12
- 23: Comparative Example 13

## Claims

1. An antiflocculation/settling agent composed of yeast extract, the agent inhibiting flocculation and/or settling arising from freezing and thawing of an aqueous solution.

2. An antiflocculation/settling agent composed of yeast extract, the agent inhibiting flocculation and/or settling arising from freezing and thawing of a food or beverage.

3. An antiflocculation/settling agent composed of yeast extract, the agent inhibiting flocculation and/or settling of protein in an acidic dairy beverage or acidic soy milk beverage having a pH of 3.5 to 5.0.

4. The antiflocculation/settling agent according to any of claims 1 to 3, wherein an amount of RNA content per solid content of the yeast extract is at least 15 wt%, dietary fiber content is at least 10 wt%, and protein content is at least 15 wt%.

5. The antiflocculation/settling agent according to claim 4, wherein mannan content makes up at least 50 wt% of the dietary fiber.

6. The antiflocculation/settling agent according to any of claims 1 to 5, wherein the yeast extract is obtained using yeast cell body residue.

7. The antiflocculation/settling agent according to any of claims 1 to 6, wherein the yeast is *Candida utilis.*

8. A method of inhibiting flocculation/settling of a food or beverage by including 0.01 to 3 wt% of the antiflocculation/settling agent according to any of claims 1 to 7 in the food or beverage.
